# EUROPEAN PATENT SPECIFICATION

(11) **EP 4 080 489 B1**
(45) Date of publication and mention of the grant of the patent: **07.02.2024**
(21) Application number: 19956322.2
(22) Date of filing: 19.12.2019
(51) Int. Cl.: G06F 7/58, H04L 9/08, G09C 1/00

(54) **SECURE RANDOM NUMBER GENERATING SYSTEM, SECURE COMPUTING DEVICE, SECURE RANDOM NUMBER GENERATING METHOD, AND PROGRAM**
SICHERES ZUFALLSZAHLENGENERIERUNGSSYSTEM, SICHERE RECHENVORRICHTUNG, SICHERES ZUFALLSZAHLENGENERIERUNGSVERFAHREN UND PROGRAMM
SYSTÈME DE GÉNÉRATION DE NOMBRES ALÉATOIRES SÉCURISÉS, DISPOSITIF INFORMATIQUE SÉCURISÉ, PROCÉDÉ DE GÉNÉRATION DE NOMBRES ALÉATOIRES SÉCURISÉS ET PROGRAMME

(43) Date of publication of application: 26.10.2022
(73) Proprietor: Nippon Telegraph And Telephone Corporation, Chiyoda-ku Tokyo 100-8116 (JP)
(72) Inventor: ICHIKAWA, Atsunori, Musashino-shi, Tokyo 180-8585 (JP)
(74) Representative: MERH-IP Matias Erny Reichl Hoffmann Patentanwälte PartG mbB
(86) International application number: PCT/JP2019/049882
(87) International publication number: WO 2021/124519

(56) References cited:
- US-A1- 2018 261 133
- WU GENQIANG ET AL: "Inherit Differential Privacy in Distributed Setting: Multiparty Randomized Function Computation", 2016 IEEE TRUSTCOM/BIGDATASE/ISPA, IEEE, 23 August 2016 (2016-08-23), pages 921-928, XP033063420, DOI: 10.1109/TRUSTCOM.2016.0157 [retrieved on 2017-02-07]
- CYNTHIA DWORK ET AL: "Our Data, Ourselves: Privacy Via Distributed Noise Generation", 1 January 2006 (2006-01-01), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 486 - 503, XP019034092, ISBN: 978-3-540-74549-5 * Section 4 *
- EIGNER, FABIENNE et al.: "Differentially Private Data Aggregation with Optimal Utility", Cryptology ePrint Archive: Report 2014 / 482, 2014, pages 1-30, XP061016801, DOI: 10.1145/2664243.2664263 Retrieved from the Internet: URL:https://eprint.iacr.org/2014/482 [retrieved on 2020-07-30]

## Description

### [Technical Field]

The present invention relates to a secure computation technique and a privacy protection technique.

### [Background Art]

Recently, demands for utilizing privacy data represented by private information have been increasing, and a secure computation technique for enabling various calculations while information is kept secret attracts attention. The secure computation is a useful technique that can be applied to various applications (e.g., refer to NPL 1). However, because the accuracy (correctness) of calculation results is ensured in the secure computation, the privacy of calculation results, which is called as "output privacy", is not protected. Mixing of a calculation result using random noise, for example, is needed in order to protect the output privacy, and in the secure computation as well, such mixing, that is, generation of random noise is one technical issue.

For such an issue, a method of generating secret random noise following a discrete Laplace distribution using the secure computation is disclosed in NPL 2. Noise that follows the discrete Laplace distribution is used for satisfying an output privacy protection standard called differential privacy, and therefore the technique disclosed in NPL 2 can be said as a useful technique for achieving the output privacy protection in the secure computation.

### [Citation List]

### [Non Patent Literature]

[NPL 1] Naoto Kiribuchi, Dai Ikarashi, Koki Hamada, Ryo Kikuchi, "MEVAL3: A Library for Programmable Secure Computation", Symposium on Cryptography and Information Security (SCIS), 2018.
[NPL 2] C. Dwork, K, Kenthapadi, F. McSherry, I. Mironov, M. Naor, "Our data, ourselves: privacy via distributed noise generation," Advances in Cryptology, EUROCRYPT, LNCS 4004, pp. 486-503, 2006.
[NPL 3] Wu Genqiang et al: "Inherit Differential Privacy in Distributed Setting: Multiparty Randomized Function Computation",DOI: 10.1109/TRUSTCOM.2016.0157 discloses a system for multiparty generation of random numbers following the Laplace distribution.

### [Summary of the Invention]

### [Technical Problem]

However, in the technique disclosed in NPL 2, noise is generated by approximating the discrete Laplace distribution with a geometric distribution, and therefore there is a problem in that the privacy protection strength decreases relative to a known technique.

The present invention has been made in view of the technical problem described above, and an object of the present invention is to generate a secure random number following a discrete Laplace distribution without performing approximation.

### [Means for Solving the Problem]

In order to achieve the above-described object, a secure random number generation system according to one aspect of the invention includes a plurality of secure computation apparatuses and generates a concealed value [r] of a random number r that follows a discrete Laplace distribution with parameter α, wherein, α being a number that is larger than 0 and smaller than 1, and N being an integer of 2 or more, the secure computation apparatus includes: a bit stream generating unit configured to generate a concealed value stream [b₀], [b₁], ..., [b_{N}] that is constituted by a concealed value [b₀] of a random number bit b₀ that follows a Bernoulli distribution with probability (1-α) / (1+α) and concealed values [b₁] , ..., [b_{N}] of random number bits b₁, ..., b_{N} that each follow a Bernoulli distribution with probability (1-α); an absolute value determining unit configured to obtain a concealed value [L] of a position L at which 1 is first set from the head of the random number bits b₀, b₁, ..., b_{N}; and a sign determining unit configured to obtain a result [L•s] obtained by multiplying the concealed value [L] by a concealed value [s] of a random sign s, as a concealed value [r] of the random number r.

### [Effects of the Invention]

According to the invention, a secure random number following a discrete Laplace distribution can be generated without performing approximation. By performing mixing of a computation result using this secure random number, the protection strength of output privacy in secure computation can be improved.

### [Brief Description of Drawings]

[Fig. 1]
   FIG. 1 is a diagram illustrating a functional configuration of a secure random number generation system.
[Fig. 2] Fig. 2 is a diagram illustrating a functional configuration of a secure computation apparatus.
[Fig. 3]

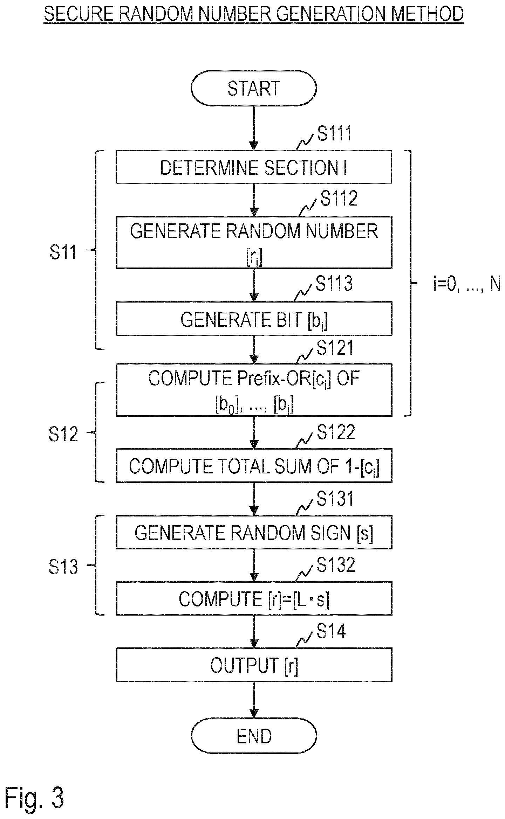

   Fig. 3 is a diagram illustrating a processing procedure of a secure random number generation method.
[Fig. 4]

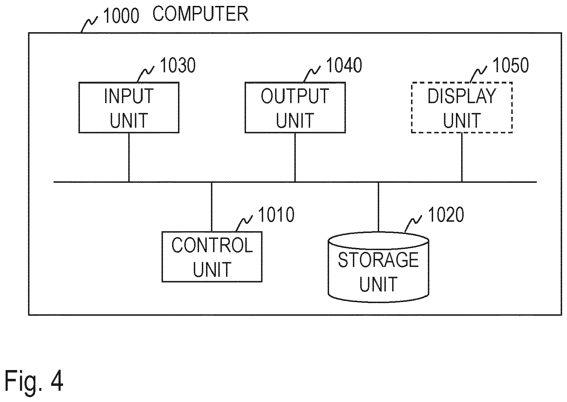

   FIG. 4 is a diagram illustrating a functional configuration of a computer.

### [Description of Embodiments]

First, the existing technologies on which the present invention is premised will be described.

### Secure computation

The secure computation is a technique for performing computation in a state in which numerical values are encrypted or concealed (see NPL 1, for example). In the following, a value obtained by concealing a certain value • is called as a "concealed value", and is represented by [•]. In the secure computation, an addition [a+b], a subtraction [a-b], and a multiplication [a•b] of concealed values [a] and [b] can be computed. Also, when a and b are truth values (1-bit value), in particular, an exclusive OR [a XOR b], a logical product [a AND b] and a logical sum [a OR b] can be computed.

A method is known for realizing more complex processing by the secure computation utilizing the above properties. Processing, among such processing, that will be used in the present invention will be shown as following.

### Prefix logical sum (Prefix-OR)

By using logical sum computation, concealed values ([b₁]=[a₁], [b₂]=[a₁ OR a₂], ..., [bₙ]=[a₁ OR a₂ OR ... OR aₙ]) of a bit stream (b₁, ..., bₙ) can be obtained with respect to concealed values ([a₂] , ..., [aₙ]) of a bit stream (a₁, ..., aₙ) . Here, with respect to any bit stream (a₁, ..., aₙ) in which aᵢ=1 is first achieved at certain i and a₁, ..., aᵢ₋₁ before aᵢ are all 0, the bit stream (b₁, ..., bₙ) satisfies a condition that b₁, ..., bᵢ₋₁=0 and bᵢ, ..., bₙ=1.

### Uniform random number generation

According to Reference Literatures 1 and 2, a concealed value [r] of a uniform random number r can be generated without knowing an original random number value r.

[Reference Literature 1] R. Cramer, I. Damgard, and Y. Ishai, "Share conversion, pseudorandom secret-sharing and applications to secure computation," Theory of Cryptography, LNCS 3378, pp. 342-362, 2005.
[Reference Literature 2] J. Bar-Ilan and D. Beaver, "Non-cryptographic fault-tolerant computing in constant number of rounds of interaction," Proceedings of the 8th annual ACM Symposium on Principles of Distributed Computing, 1989, pp. 201-209.

### Interval test

According to Reference Literature 3, with respect to a concealed value [a] of a certain value a, a concealed value [b] of a concealed bit obtained by judging whether or not the value a is contained in a certain range I can be obtained. Here, if ael, then b=1, and if not, then b=0.

[Reference Literature 3] T. Nishide and K. Ohta, "Multiparty computation for interval, equality, and comparison without bit-decomposition protocol," Public Key Cryptography, LNCS 4450, pp. 343-360, 2007.

### Bernoulli distribution

The Bernoulli distribution Ber(β) is a distribution for generating 1 with probability β, and 0 with probability 1-β.

### Discrete Laplace distribution

Assume that probability variables B₀, B₁, ... that are independently tried satisfy B₀~Ber((1-α)/(1+α)) and Bⱼ≥∼Ber(1-α). Here, ~ indicates to follow the distribution. That is, assume that the probability variable B₀ follows the Bernoulli distribution with probability (1-α)/(1+α), and the probability variables B₁, B₂, ... follow the Bernoulli distribution with probability (1-α). Here, with respect to a position L at which B_{L}=1 is first achieved from the head (that is, L that satisfies B₀, ... , B_{L-1}=0 and B_{L}=1) , a value ~L=L or -L obtained by inverting the sign with probability 1/2 follows a discrete Laplace distribution DL(α) with parameter α.

### Embodiment

Here, an embodiment of the present invention will be described in detail. Note that the same reference numerals are added to constituent units that have the same function, in the drawings, and redundant description will be omitted.

In a secure random number generation system of the embodiment, n (≥2) secure computation apparatuses compute a concealed value of a random value that follows the discrete Laplace distribution in a cooperated manner. In the present embodiment, a secure computation on a finite field Zₚ with order p is envisioned, but there is no limitation thereto, and the present invention can be similarly applied to a secure computation on another finite field.

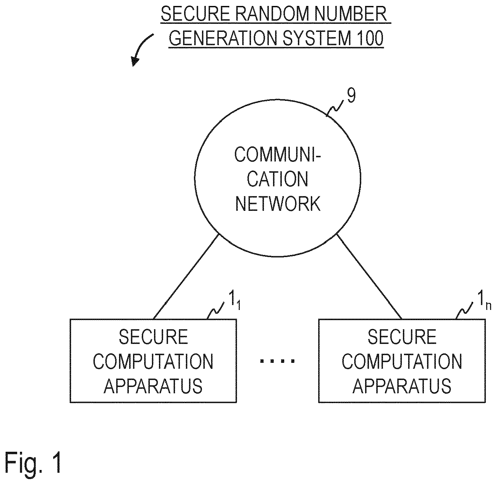

A secure random number generation system 100 of the embodiment includes n (≥2) secure computation apparatuses 1₁, ..., 1ₙ, as shown in Fig. 1, for example. In the present embodiment, the secure computation apparatuses 1₁, ..., 1ₙ are connected to a communication network 9. The communication network 9 is a communication network of a circuit switching system or a packet exchange system that is configured such that connected apparatuses can communicate to each other, and the Internet, LAN (Local Area Network), WAN (Wide Area Network), or the like can be used. Note that the apparatuses need not communicate on-line via the communication network 9. For example, the configuration may be such that information to be input to the secure computation apparatuses 1₁, ..., 1ₙ is stored in a portable recording medium such as a magnetic tape or a USB memory, and the information is input off-line from the portable recording medium to the secure computation apparatuses 1₁, ..., 1ₙ, for example.

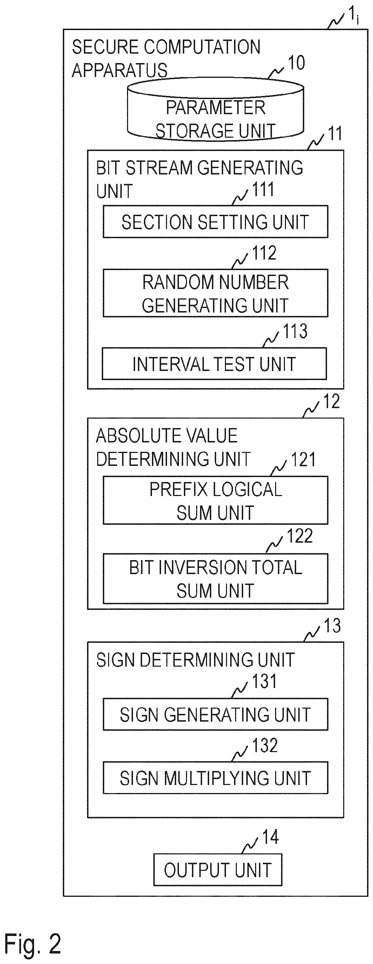

The secure computation apparatus 1ᵢ (i=1, ..., n) included in the secure random number generation system 100 of the embodiment includes a parameter storage unit 10, a bit stream generating unit 11, an absolute value determining unit 12, a sign determining unit 13, and an output unit 14, as shown in Fig. 2, for example. The bit stream generating unit 11 includes a section setting unit 111, a random number generating unit 112, and an interval test unit 113. The absolute value determining unit 12 includes a prefix logical sum unit 121 and a bit inversion total sum unit 122. The sign determining unit 13 includes a sign generating unit 131 and a sign multiplying unit 132. The secure random number generation method of the present embodiment is realized by the secure computation apparatus 1ᵢ (i=1, ..., n) performing the processing in the steps to be described later while cooperating with another secure computation apparatus 1ⱼ (j=1, ..., n, where i≠j).

The secure computation apparatus 1ᵢ is a special apparatus that is configured by a special program being read in a known or dedicated computer including a central processing unit (CPU), a main storage device (RAM: Random Access Memory), and the like, for example. The secure computation apparatus 1ᵢ executes the processing under the control of the central processing unit, for example. The data input to the secure computation apparatus 1ᵢ and the data obtained by the processing are stored in the main storage device, for example, and the data stored in the main storage device is read out to the central processing unit as necessary and is used for another processing. At least some of the processing units of the secure computation apparatus 1ᵢ may be configured by hardware such as an integrated circuit. The storage units included in the secure computation apparatus 1ᵢ can be configured by a main storage device such as RAM (Random Access Memory), an auxiliary storage device such as a hard disk, an optical disk, or a semiconductor memory device such as a flash memory, or middleware such as a relational database or key-value store, for example.

In the following, the processing procedure of the secure random number generation method to be executed by the secure random number generation system 100 of the embodiment will be described with reference to Fig. 3.

The parameter storage unit 10 stores a parameter α of a predetermined discrete Laplace distribution DL(α) and a sufficiently large natural number N. Note that α is a number that is larger than 0 and smaller than 1.

In step S11, the bit stream generating unit 11 generates a stream [b₀], [b₁], ..., [b_{N}] of concealed values of random number bits b₀, b₁, ..., b_{N} that follow a Bernoulli distribution. Here, assume that the conditions of b₀∼Ber((1-α)/(1+α)) and b₁, ..., b_{N}∼Ber(1-α) are satisfied. That is, the random number bit b₀ follows a Bernoulli distribution with probability (1-α)/(1+α), and the random number bits b₁, ..., b_{N} follow a Bernoulli distribution with probability (1-α). The concealed value [b₁] (i=0, ..., N) of a random number bit bᵢ (i=0,0 ..., N) is generated by executing the following steps Sill to S113 for each integer i.

In step Sill, the section setting unit 111 selects a section I=[γ₁, γ_{2]} on the finite field Zₚ such that β≈|I|/p. Here, β is probability of the Bernoulli distribution. That is, if i=0, then β=(1-α)/(1+α), and if i≥1, then β=(1-α). The section setting unit 111 outputs the selected section I to the interval test unit 113.

In step S112, the random number generating unit 112 generates a concealed value [rᵢ] of a random number rᵢ on the finite field Zₚ. The random number generating unit 112 outputs the generated concealed value [rᵢ] of the random number rᵢ to the interval test unit 113.

In step S113, the interval test unit 113 judges rᵢ∈I by an interval test. That is, a concealed value [b] of a result b that is obtained by judging whether or not the random number rᵢ is included in the section I is generated, using the concealed value [rᵢ] of the random number rᵢ. This judgment result b follows a Bernoulli distribution Ber(β) with probability β. That is, b~Ber(β) is satisfied. The interval test unit 113 outputs the concealed value [b] of the judgment result b as the concealed value [b₁] of the random number bit bᵢ.

In step S12, the absolute value determining unit 12 obtains a concealed value [L] of a position L at which 1 is first set from the head out of the random number bits b₀, b₁, ..., b_{N}. The concealed value [L] of the position L can be obtained by executing the following steps S121 to S122.

In step S121, the prefix logical sum unit 121 obtains the result of executing Prefix-OR on a concealed value stream [b₀], [b₁] , ..., [b_{N}] as a concealed value stream [c₀], [c₁], ..., [c_{N]}. Specifically, the prefix logical sum unit 121 obtains [c₀]= [b₀], [cᵢ]=[b₀] OR [bᵢ], ..., [c_{N}]=[b₀] OR ... OR [b_{N}], in which the result of computing [b₀] OR ... OR [b₁] for each integer i is the concealed value [cᵢ]. The prefix logical sum unit 121 outputs the concealed value stream [c₀], [c₁] , ..., [c_{N}] to the bit inversion total sum unit 122.

In step S122, the bit inversion total sum unit 122 computes [L]=Σᵢ(1-[cᵢ]). L indicates the position L at which b_{L}=1 is first achieved from the head, out of the random number bits b₀, b₁, ..., b_{N}. The bit inversion total sum unit 122 outputs the computed concealed value [L] of the position L.

In step S13, the sign determining unit 13 obtains a result [L•s] that is a result of multiplying the concealed value [L] of the position L by a concealed value [s] of a random sign s. The multiplication result [L•s] can be obtained by executing the following steps S131 and S132.

In step S131, the sign generating unit 131 generates the concealed value [s] of the random sign s by computing [s]←_{R}{-1, 1}. Here, ←_{R} represents an operation for randomly selecting an element of a set. The sign generating unit 131 outputs the generated concealed value [s] of the sign s to the sign multiplying unit 132.

In step S132, the sign multiplying unit 132 multiplies the concealed value [L] of the position L by the concealed value [s] of the sign s. The concealed value [L•s] of this multiplication result is a concealed value of a random number that follows a discrete Laplace distribution DL(α). The sign multiplying unit 132 outputs the concealed value [L•s] of the multiplication result.

In step S14, the output unit 14 outputs the concealed value [L•s] of the multiplication result as the concealed value [r] of a random number r that follows a discrete Laplace distribution DL(α) with parameter α.

In the present invention, the secure computation of a random number that follows a discrete Laplace distribution is realized by performing secure computation on a random number bit that follows the Bernoulli distribution. Here, in the present invention, as a result of directly generating a random number that follows a discrete Laplace distribution without performing approximation by a geometric distribution, the reduction in privacy protection strength that occurs due to approximation is avoided. In this way, according to the present invention, secure random numbers, which follow the discrete Laplace distribution, that can be used for output privacy protection of secure computation results and the like can be generated without performing approximation. In the known methods, approximation by a geometric distribution was needed.

Although an embodiment of the present invention have been described above, a specific configuration is not limited to the embodiment, and even if a design change or the like is made without departing from the spirit of the present invention, when necessary, such a change is included in the scope of the present invention as a matter of course. The various kinds of processing described in the embodiment are not necessarily executed in chronological order according to the order of descriptions, and may be parallelly or individually executed depending on the processing capabilities of the device that executes the processing or according to the need.

### Program and Recording Medium

When the various processing functions of the devices described in the above embodiment are realized using a computer, the functions that the devices need to have are to be described in the form of a program. Then, this program is read in a storage unit 1020 of a computer shown in Fig. 4, and a control unit 1010, an input unit 1030, an output unit 1040 are caused to operate, and as a result, the various processing functions of the above devices are realized on the computer.

The program that describes the contents of such processing can be recorded in a computer-readable recording medium. Any kind of computer-readable recording medium may be employed, such as a magnetic recording device, an optical disc, a magneto-optical recording medium, or a semiconductor memory.

The program is distributed by, for example, selling, transferring, or lending a portable recording medium such as a DVD or a CD-ROM on which the program is recorded. Furthermore, it is possible to employ a configuration in which the program is stored in a storage device of a server computer, and the program is distributed by the server computer transferring the program to other computers via a network.

A computer that executes such a program first stores, in a storage device thereof, the program that is recorded on a portable recording medium or that has been transferred from a server computer. Thereafter, when executing processing, the computer reads the program stored in the storage device thereof, and executes processing according to the program thus read. In another mode of execution of the program, the computer may read the program directly from a portable recording medium and execute processing according to the program. In addition, the computer may sequentially execute processing according to the received program every time the computer receives the program transferred from a server computer. Also, it is possible to employ a configuration for executing the above-described processing by using a so-called ASP (Application Service Provider) type service, which does not transfer a program from the server computer to the computer, but realizes processing functions by only making instructions to execute the program and acquiring the results. The program according to the embodiments may be information that is used by an electronic computer to perform processing, and that is similar to a program (e.g. data that is not a direct command to the computer, but has the property of defining computer processing).

Also, although the device is formed by running a predetermined program on a computer in the embodiment, at least part of the content of the above processing may be realized using hardware.

## Claims

1. A secure random number generation system (100) including a plurality of secure computation apparatuses (1₁, ...,1ₙ) and generating a concealed value [r] of a random number r, the random number r following a discrete Laplace distribution with parameter α,
wherein, α is a number that is larger than 0 and smaller than 1, and N is an integer of 2 or more,
the secure computation apparatuses each comprises:
a bit stream generating unit (11) adapted to generate a concealed value stream [b₀], [b₁], ..., [b_{N}] that is constituted by a concealed value [b₀] of a random number bit b₀ that follows a Bernoulli distribution with probability (1-α)/(1+α) and concealed values [bᵢ], ..., [b_{N}] of random number bits b₁, ..., b_{N} that each follow a Bernoulli distribution with probability (1-α) ;
an absolute value determining unit (12) adapted to obtain a concealed value [L] of a position L at which 1 is first set from the head of the random number bits b₀, b₁, ..., b_{N}; and
a sign determining unit (13) adapted to obtain a result [L•s] obtained by multiplying the concealed value [L] by a concealed value [s] of a random sign s, as the concealed value [r] of the random number r.

2. The secure random number generation system (100) according to claim 1,
wherein, Zₚ is a finite field of order p and i is each of integers from 0 to N,
the bit stream generating unit (11) includes:
a section setting unit (111) adapted to set a section I in which | I | /p is close to the probability of the Bernoulli distribution;
a random number generating unit (112) adapted to generate a concealed value [rᵢ] of a random number rᵢ on the finite field Zₚ, for each integer i; and
an interval test unit (113) adapted to generate a result obtained by judging whether or not the random number rᵢ is included in the section I using the concealed value [ri], for each integer i, as the concealed value [bᵢ].

3. The secure random number generation system (100) according to claim 2,
wherein the absolute value determining unit (12) includes:
a prefix logical sum unit (121) adapted to generate a concealed value stream [c₀], [c₁], ..., [c_{N}], the result of computing [b₀] OR ... OR [bᵢ] for each integer i being a concealed value [cᵢ]; and
a bit inversion total sum unit (122) adapted to generate a result of computing Σᵢ(1-[cᵢ]) as the concealed value [L].

4. A secure computation apparatus (1) being used in a secure random number generation system (100), the secure random number generation system generating a concealed value [r] of a random number r, the random number r following a discrete Laplace distribution with parameter α, wherein α is a number that is larger than 0 and smaller than 1, and N is an integer of 2 or more,
the secure computation apparatus comprises:
a bit stream generating (11) unit adapted to generate a concealed value stream [b₀], [b₁], ..., [b_{N}] that is constituted by a concealed value [b₀] of a random number bit b₀ that follows a Bernoulli distribution with probability (1-α)/(1+α) and concealed values [bᵢ], ..., [b_{N}] of random number bits b₁, ..., b_{N} that each follow a Bernoulli distribution with probability (1-α);
an absolute value determining unit (12) adapted to obtain a concealed value [L] of a position L at which 1 is first set from the head of the random number bits b₀, b₁, ..., b_{N}; and
a sign determining unit (13) adapted to obtain a result [L•s] obtained by multiplying the concealed value [L] by a concealed value [s] of a random sign s, as the concealed value [r] of the random number r.

5. A secure random number generation method being to be executed by a secure random number generation system (100) including a plurality of secure computation apparatuses (1₁, ...,1ₙ), the secure random number generation system generating a concealed value [r] of a random number r, the random number r following a discrete Laplace distribution with parameter α,
wherein, α is a number being larger than 0 and smaller than 1 and N is an integer of 2 or more,
the secure random number generation method comprising:
generating, by a bit stream generating unit (11) of each of the secure computation apparatuses, a concealed value stream [b₀], [bᵢ], ..., [b_{N}] that is constituted by a concealed value [b₀] of a random number bit b₀ that follows a Bernoulli distribution with probability (1-α)/(1+α) and concealed values [b₁], ..., [b_{N}] of random number bits b₁, ..., b_{N} that each follow a Bernoulli distribution with probability (1-α);
obtaining, by an absolute value determining unit (12) of each of the secure computation apparatuses, a concealed value [L] of a position L at which 1 is first set from the head of the random number bits b₀, b₁, ..., b_{N}; and
obtaining, by a sign determining unit (13) of each of the secure computation apparatuses, a result [L•s] obtained by multiplying the concealed value [L] by a concealed value [s] of a random sign s, as the concealed value [r] of the random number r.

6. A program for causing a computer to function as the secure computation apparatus (1) according to claim 4.

## Patentansprüche

1. System (100) zum Generieren sicherer Zufallszahlen, das eine Mehrzahl von Vorrichtungen (1₁, .., 1ₙ) zur sicheren Berechnung umfasst und einen verborgenen Wert [r] einer Zufallszahl r generiert, wobei die Zufallszahl r einer diskreten Laplace-Verteilung mit einem Parameter α folgt,
wobei α eine Zahl ist, die größer als 0 und kleiner als 1 ist, und N eine ganze Zahl von 2 oder mehr ist,
wobei die Vorrichtungen zur sicheren Berechnung jeweils umfassen:
eine Bitstrom-Generierungseinheit (11), die dazu ausgelegt ist, einen Strom verborgener Werte [b₀], [b₁] , .., [b_{N}] zu generieren, der durch einen verborgenen Wert [b₀] eines Zufallszahlenbits b₀, der einer Bernoulli-Verteilung mit einer Wahrscheinlichkeit (1 - α)/(1 + α) folgt, und verborgene Werte [bᵢ], .., [b_{N}] von Zufallszahlenbits b₁, ... b_{N}, die jeweils einer Bernoulli-Verteilung mit einer Wahrscheinlichkeit (1 - α) folgen, gebildet ist,
eine Absolutwert-Bestimmungseinheit (12), die dazu ausgelegt ist, einen verborgenen Wert [L] einer Position L zu erlangen, an der vom Beginn der Zufallszahlenbits b₀, b₁, ..., b_{N} erstmalig eine 1 gesetzt ist, und
eine Vorzeichenbestimmungseinheit (13), die ausgelegt ist, um als den verborgenen Wert [r] der Zufallszahl r ein Ergebnis [L•s] zu erlangen, das durch Multiplizieren des verborgenen Werts [L] mit einem verborgenen Wert [s] eines Zufallsvorzeichens s erhalten wird.

2. System (100) zum Generieren sicherer Zufallszahlen nach Anspruch 1,
wobei Zₚ ein endlicher Körper der Ordnung p ist, und i jede ganze Zahl von 0 bis N ist,
die Bitstrom-Generierungseinheit (11) umfasst:
eine Abschnittseinstelleinheit (111), die ausgelegt ist, um einen Abschnitt I einzustellen, bei dem |I|/p nah der Wahrscheinlichkeit der Bernoulli-Verteilung liegt,
eine Zufallszahlen-Generierungseinheit (112), die ausgelegt ist, um für jede ganze Zahl i einen verborgenen Wert [rᵢ] einer Zufallszahl rᵢ auf dem endlichen Körper Zₚ zu generieren, und
eine Intervalltesteinheit (113), die ausgelegt ist, um als den geheimen Wert [bᵢ], für jede ganze Zahl i, ein Ergebnis zu generieren, das durch Bewerten unter Verwendung des verborgenen Werts [rᵢ] , ob die Zufallszahl rᵢ im Abschnitt I aufgenommen ist oder nicht, erhalten wird.

3. System (100) zum Generieren sicherer Zufallszahlen nach Anspruch 2,
wobei die Absolutwert-Bestimmungseinheit (12) umfasst:
eine Präfix-Logiksummeneinheit (121), die dazu ausgelegt ist, einen Strom verborgener Werte [c₀], [c₁] , ..., [C_{N}] zu generieren, wobei das Ergebnis des Berechnens von [b₀] ODER ... ODER [bᵢ] für jede ganze Zahl i ein verborgener Wert [c₁] ist,
eine Bitinversions-Gesamtsummeneinheit (122), die ausgelegt ist, um als den verborgenen Wert [L] ein Ergebnis des Berechnens von Σᵢ(1-[cᵢ]) zu generieren.

4. Vorrichtung (1) zur sicheren Berechnung, die in einem System (100) zum Generieren sicherer Zufallszahlen verwendet wird, wobei das System zum Generieren sicherer Zufallszahlen einen verborgenen Wert [r] einer Zufallszahl r generiert, wobei die Zufallszahl r einer diskreten Laplace-Verteilung mit einem Parameter α folgt, wobei α eine Zahl ist, die größer als 0 und kleiner als 1 ist, und N eine ganze Zahl von 2 oder mehr ist,
wobei die Vorrichtung zur sicheren Berechnung umfasst:
eine Bitstrom-Generierungseinheit (11), die dazu ausgelegt ist, einen Strom verborgener Werte [b₀], [b₁] , .., [b_{N}] zu generieren, der durch einen verborgenen Wert [b₀] eines Zufallszahlenbits b₀, der einer Bernoulli-Verteilung mit einer Wahrscheinlichkeit (1 - α)/(1 + α) folgt, und verborgene Werte [bᵢ], .., [b_{N}] von Zufallszahlenbits b₁, ... b_{N}, die jeweils einer Bernoulli-Verteilung mit einer Wahrscheinlichkeit (1 - α) folgen, gebildet ist,
eine Absolutwert-Bestimmungseinheit (12), die dazu ausgelegt ist, einen verborgenen Wert [L] einer Position L zu erlangen, an der vom Beginn der Zufallszahlenbits b₀, b₁, ..., b_{N} erstmalig eine 1 gesetzt ist, und
eine Vorzeichenbestimmungseinheit (13), die ausgelegt ist, um als den verborgenen Wert [r] der Zufallszahl r ein Ergebnis [L•s] zu erlangen, das durch Multiplizieren des verborgenen Werts [L] mit einem verborgenen Wert [s] eines Zufallsvorzeichens s erhalten wird.

5. Verfahren zum Generieren sicherer Zufallszahlen, das durch ein System (100) zum Generieren sicherer Zufallszahlen, das eine Mehrzahl von Vorrichtungen (1₁, .., 1ₙ) zur sicheren Berechnung umfasst, ausgeführt wird, wobei das System zum Generieren sicherer Zufallszahlen einen verborgenen Wert [r] einer Zufallszahl r generiert, wobei die Zufallszahl r einer diskreten Laplace-Verteilung mit einem Parameter α folgt,
wobei α eine Zahl ist, die größer als 0 und kleiner als 1 ist, und N eine ganze Zahl von 2 oder mehr ist,
wobei das Verfahren zum Generieren sicherer Zufallszahlen umfasst:
Generieren, durch eine Bitstrom-Generierungseinheit (11) jeder der Vorrichtungen zur sicheren Berechnung, eines Stroms verborgener Werte [b₀], [b₁] , .., [b_{N}], der durch einen verborgenen Wert [b₀] eines Zufallszahlenbits b₀, der einer Bernoulli-Verteilung mit einer Wahrscheinlichkeit (1 - α)/(1 + α) folgt, und verborgene Werte [bᵢ], .., [b_{N}] von Zufallszahlenbits b₁, ... b_{N}, die jeweils einer Bernoulli-Verteilung mit einer Wahrscheinlichkeit (1 - α) folgen, gebildet ist,
Erlangen, durch eine Absolutwert-Bestimmungseinheit (12) jeder der Vorrichtungen zur sicheren Berechnung, eines verborgenen Wertes [L] einer Position L, an der vom Beginn der Zufallszahlenbits b₀, b₁, ..., b_{N} erstmalig eine 1 gesetzt ist, und
Erlangen, durch eine Vorzeichenbestimmungseinheit (13) jeder der Vorrichtungen zur sicheren Berechnung, als den verborgenen Wert [r] der Zufallszahl r, eines Ergebnisses [L•s], das durch Multiplizieren des verborgenen Werts [L] mit einem verborgenen Wert [s] eines Zufallsvorzeichens s erhalten wird.

6. Programm zum Veranlassen eines Computers zum Funktionieren als die Vorrichtung (1) zur sicheren Berechnung nach Anspruch 4.

## Revendications

1. Système de génération de nombre aléatoire sécurisé (100) incluant une pluralité d'appareils de calcul sécurisé (1₁, ..., 1ₙ) et générant une valeur dissimulée [r] d'un nombre aléatoire r, le nombre aléatoire r suivant une distribution de Laplace discrète avec un paramètre α,
dans lequel α est un nombre qui est supérieur à 0 et inférieur à 1, et N est un entier supérieur ou égal à 2,
les appareils de calcul sécurisé comprennent chacun :
une unité de génération de flux binaire (11) apte à générer un flux de valeurs dissimulées [b₀], [b₁] , ..., [bₙ] qui est constitué d'une valeur dissimulée [b₀] d'un bit de nombre aléatoire b₀ qui suit une distribution de Bernoulli avec une probabilité (1-α)/(1+α) et de valeurs dissimulées [b₁], ..., [b_{N}] de bits de nombre aléatoire b₁, ..., b_{N} qui suivent chacun une distribution de Bernoulli avec une probabilité (1-α) ;
une unité de détermination de valeur absolue (12) apte à obtenir une valeur dissimulée [L] d'une position L à laquelle 1 est réglé en premier à partir de la tête des bits de nombre aléatoire b₀, b₁, ..., b_{N} ; et
une unité de détermination de signe (13) apte à obtenir un résultat [L•s] obtenu par la multiplication de la valeur dissimulée [L] par une valeur dissimulée [s] d'un signe aléatoire s, en tant que la valeur dissimulée [r] du nombre aléatoire r.

2. Système de génération de nombre aléatoire sécurisé (100) selon la revendication 1,
dans lequel zₚ est un champ fini d'ordre p et i est chacun d'entiers de 0 à N,
l'unité de génération de flux binaire (11) inclut :
une unité de réglage de section (111) apte à régler une section I dans laquelle III/p est proche de la probabilité de la distribution de Bernoulli ;
une unité de génération de nombre aléatoire (112) apte à générer une valeur dissimulée [rᵢ] d'un nombre aléatoire rᵢ sur le champ fini Zₚ, pour chaque entier i ; et
une unité de test d'intervalle (113) apte à générer un résultat obtenu par le jugement si le nombre aléatoire rᵢ est ou non inclus dans la section I en utilisant la valeur dissimulée [rᵢ], pour chaque entier i, en tant que la valeur dissimulée [bᵢ].

3. Système de génération de nombre aléatoire sécurisé (100) selon la revendication 2,
dans lequel l'unité de détermination de valeur absolue (12) inclut :
une unité de somme logique de préfixes (121) apte à générer un flux de valeurs dissimulées [c₀], [c₁] , ..., [c_{N}] , le résultat du calcul [b₀] OU ... OU [b₁] pour chaque entier i étant une valeur dissimulée [c₁] ; et
une unité de somme totale d'inversion de bits (122) apte à générer un résultat du calcul Σᵢ(1- [cᵢ]) en tant que la valeur dissimulée [L].

4. Appareil de calcul sécurisé (1) étant utilisé dans un système de génération de nombre aléatoire sécurisé (100), le système de génération de nombre aléatoire sécurisé générant une valeur dissimulée [r] d'un nombre aléatoire r, le nombre aléatoire r suivant une distribution de Laplace discrète avec un paramètre α, dans lequel α est un nombre qui est supérieur à 0 et inférieur à 1, et N est un entier supérieur ou égal à 2,
l'appareil de calcul sécurisé comprend :
une unité de génération de flux binaire (11) apte à générer un flux de valeurs dissimulées [b₀], [b₁] , ..., [bₙ] qui est constitué d'une valeur dissimulée [b₀] d'un bit de nombre aléatoire b₀ qui suit une distribution de Bernoulli avec une probabilité (1-α)/(1+α) et de valeurs dissimulées [b₁], ..., [b_{N}] de bits de nombre aléatoire b₁, ..., b_{N} qui suivent chacun une distribution de Bernoulli avec une probabilité (1-α) ;
une unité de détermination de valeur absolue (12) apte à obtenir une valeur dissimulée [L] d'une position L à laquelle 1 est réglé en premier à partir de la tête des bits de nombre aléatoire b₀, b₁, ..., b_{N} ; et
une unité de détermination de signe (13) apte à obtenir un résultat [L•s] obtenu par la multiplication de la valeur dissimulée [L] par une valeur dissimulée [s] d'un signe aléatoire s, en tant que la valeur dissimulée [r] du nombre aléatoire r.

5. Procédé de génération de nombre aléatoire sécurisé à exécuter par un système de génération de nombre aléatoire sécurisé (100) incluant une pluralité d'appareils de calcul sécurisé (1₁, ..., 1ₙ), le système de génération de nombre aléatoire sécurisé générant une valeur dissimulée [r] d'un nombre aléatoire r, le nombre aléatoire r suivant une distribution de Laplace discrète avec un paramètre α,
dans lequel α est un nombre qui est supérieur à 0 et inférieur à 1, et N est un entier supérieur ou égal à 2,
le procédé de génération de nombre aléatoire sécurisé comprenant :
la génération, par une unité de génération de flux binaire (11) de chacun des appareils de calcul sécurisé, d'un flux de valeurs dissimulées [b₀], [b₁], ..., [bₙ] qui est constitué d'une valeur dissimulée [b₀] d'un bit de nombre aléatoire b₀ qui suit une distribution de Bernoulli avec une probabilité (1-α)/(1+α) et de valeurs dissimulées [b₁], ..., [b_{N}] de bits de nombre aléatoire b₁, ..., b_{N} qui suivent chacun une distribution de Bernoulli avec une probabilité (1-α) ;
l'obtention, par une unité de détermination de valeur absolue (12) de chacun des appareils de calcul sécurisé, d'une valeur dissimulée [L] d'une position L à laquelle 1 est réglé en premier à partir de la tête des bits de nombre aléatoire b₀, b₁, ..., b_{N} ; et
l'obtention, par une unité de détermination de signe (13) de chacun des appareils de calcul sécurisé, d'un résultat [L•s] obtenu par la multiplication de la valeur dissimulée [L] par une valeur dissimulée [s] d'un signe aléatoire s, en tant que la valeur dissimulée [r] du nombre aléatoire r.

6. Programme pour amener un ordinateur à fonctionner en tant que l'appareil de calcul sécurisé (1) selon la revendication 4.
